# EUROPÄISCHE PATENTANMELDUNG

(11) **EP 0 935 361 A2**
(43) Veröffentlichungstag der Anmeldung: **11.08.1999**
(21) Anmeldenummer: 99440012.5
(22) Anmeldetag: 29.01.1999
(51) Int. Cl.: H04H 1/02

(54) **Breitband Datenübertragungssystem für Verteildienste und für interaktive Dienste**

(30) Priorität: 05.02.1998 DE 19804425
(71) Anmelder: ALCATEL, 75008 Paris (FR)
(72) Erfinder: Heidemann, Rolf, 71732 Tamm (DE)
(74) Vertreter: Rausch, Gabriele, Dr.

(57) **Zusammenfassung**

Es wird ein Breitbandinformationssystem für Verteildienste und interaktive Dienste vorgeschlagen, das eine Informationszentrale (6) und ein Breitbandnetz (5) sowie einen Umsetzer mit mindestens einem koaxialen Netz besitzt, wobei die Daten digital für das Breitbandnetz übertragen werden und wobei zur Modulation und Digitalisierung der Kanäle in der Informationszentrale für jeden Kanal ein getrennter Digitalisierer vorhanden ist und die digitalisierten Kanäle über einen Multiplexer (8) zu einem digitalen Datenstrom zusammengefaßt sind.

## Beschreibung

Die Erfindung geht aus von einem Breitbandinformationssystem für Verteildienste und interaktive Dienste nach der Gattung des Hauptanspruchs.

Aus der DE-OS 44 35 767 ist ein Breitbandinformationssystem bekannt, bei dem Daten sowohl analog als auch digital übertragen werden. Heute sind bereits zahlreiche Teilnehmer über Koaxialnetze mit Fernsehstationen oder anderen Diensten verbunden. Über diese Netze kann neben dem Empfang von Kabelfernsehprogrammen auch Fernsehabrufbetrieb (Pay on Demand, Pay-TV) in einfacher Form abgewickelt werden, allerdings ohne Interaktion mit der sendenden Quelle. In Zukunft sind Videoabruf (Video on demand) mit direktem Zugriff auf Videodatenbanken möglich. Die Breitbandnetze, die die Verbindung zwischen den Informationszentralen und den Umsetzern, die die Verbindung zu den einzelnen Teilnehmern herstellen, werden zunehmend mit Lichtwellenleitern aufgebaut. Spätestens jedoch nach dem Umsetzer müssen die Signale auf ein koaxiales Netz umgesetzt werden. Generell ist die Nutzung von Koaxialkabeln als Übertragungsmedium bis zu einer Frequenz von ca. 1 GHz und die analoge Übertragung von Fernseh- und Tonsignalen wird im Bereich von 47 MHz bis zu 450 MHz möglich. Um die Übertragung über die optischen Breitbandnetze zu optimieren, werden die Daten der einzelnen Kanäle neuerdings digital übertragen.

Dabei werden die einzelnen Kanäle moduliert, einer Upkonversion unterzogen, addiert und anschließend D-S-moduliert. Dadurch entsteht ein Gesamtdatenstrom, der eine Mischung der verschiedenen Ursprungskanäle aufweist und bei dem es nicht mehr möglich ist, die einzelnen Kanäle zu beeinflussen. Es ist im Umsetzer nur eine Gesamtdemodulation der Kanäle möglich, um dann anschließend konventionell eine Kanalweiterbearbeitung durchzuführen.

Das erfindungsgemäße Breitbandübertragungssystem mit den kennzeichnenden Merkmalen des Hauptanspruchs hat demgegenüber den Vorteil, daß die einzelnen Kanäle in der lnformationszentrale getrennt voneinander D-S-moduliert werden und erst anschließend die digitalisierten und modulierten Kanäle in einem geeigneten Multiplexer zu einem digitalen Datenstrom zusammengefaßt werden. Dadurch erhält man digitalisierte Daten, die über existierende, hochbitratige Transportsysteme verteilt werden können und in Datenformaten wie SDH/SONET/ADM verwendet werden können. Dadurch ist es möglich, Einzelndatenpakete im Umsetzer zu selektieren, und es ist nicht mehr notwendig, immer den gesamten Datenstrom in jedem Umsetzer zu demodulieren.

Durch den in den Unteransprüchen aufgeführten Maßnahmen sind vorteilhafte Weiterbildungen und Verbesserungen des im Hauptanspruch angegebenen Breitbandübertragungssystems möglich. Besonders vorteilhaft ist es, daß im Umsetzer selektiv Kanäle rückgewandelt werden können, indem ein Demultiplexer, ein digitaler Upkonverter und ein Digital-/Analog-wandler zur Rückgewinnung einzelner Kanäle eingesetzt werden. Durch Steuerung im Umsetzer ist dann entweder eine komplette Rückgewinnung aller eingespeisten Datenkanäle oder eine selektive Rückwandlung möglich.

Vorteilhafterweise wird als Breitbandübertragungsnetz ein SDH-Transportsystem verwendet, wobei Multiplexer und Demultiplexer im System dem SDH-Protokoll angepaßt sein müssen. Durch Verwendung dieses bekannnten Protokolls sind gezielte Zugriffe auf Dantenkanäle einfach möglich. Das System ermöglicht durch seine Routingfunktionen diesen Zugriff . Vorteilhafterweise werden im System einfache Delta-/Sigma-Modulatoren und Demodulatoren zur Modulierung und Demodulierung der digitalen Signale verwendet.

Ein Ausführungsbeispiel der Erfindung ist in der Zeichnung dargestellt und in der nachfolgenden Beschreibung näher erläutert. Es zeigt Figur 1 den Stand der Technik in einer Informationszentrale, Figur 2 der erfindungsgemäße Aufbau der lnformationszentrale und Figur 3 der erfindungsgemäße Aufbau eines Umsetzers.

Die Daten der Fernsehkanäle (D1 - Dn) werden in der Informationszentrale (6) in einen Modulator (1) eingespeist. Der Modulator (1) ist jeweils mit einem Upkonverter (2) verbunden. Der Ausgang des Upkonverters (2) ist mit dem Eingang eines Addierers (3) verbunden, dessen Ausgang wiederum mit einem D-S-Modulierer (4) verbunden ist. Der Ausgang des D-S-Modulators (4) wird an das Breitbandübertragungsnetz (5) angeschlossen. Die Daten (D1 - Dn) werden in der Informationszentrale zunächst moduliert. Dabei ist jede Form der Modulation möglich, z. B. eine QPSK-Modulation oder die verschiedenen Formen der QAM-Modulation. Der modulierte Datenstrom wird im Upkonverter auf die Trägerfrequenz umgesetzt, die sich im Band unterhalb von 450 MHz befindet. Dieser modulierte Datenstrom durchläuft den Addierer (3), in dem die Gesamtheit aller Datenströme zu einer Kanalmischung im UHF-Frequenzband zusammengesetzt wird. Die UHF-Kanalmischung durchläuft einen D-S-Modulator und muß mit großen Datenraten, im allgemeinen mehr als 2,5 GBit/Sek., umgesetzt werden. Dieser Datenstrom wird über das Breitbandnetz (5) übertragen. An der Umsetzerseite befindet sich die Demodulation, die wiederum eine UHF-Kanalmischung rückgewinnt und in das koaxiale Netz einspeist.

Das erfindungsgemäße System wird auf Senderseite 2 in Figur dargestellt. Der Datenstrom (D1 - Dn) geht wiederum eingangsseitig in einen Modulator (1). Der Ausgang des Modulators (1) ist jeweils mit einem D-S-Modulator (7) verbunden, dessen Ausgang am Eingang eines Multiplexers (8) anliegt. Der Multiplexer (8) ist ausgangsseitig mit dem Breitbandübertragungsnetz (5) verbunden. Die herein kommenden digitalen Videodatenströme werden in den Modulatoren (1) moduliert. Dabei ist jede Form der Modulation möglich. Auch ist die Kombination ganz unterschiedlicher Modulationsverfahren im Modulator (1) für die jeweiligen Datenströme möglich. Die modulierten HF-Signale weisen dann eine Frequenz deutlich unter 100 MHz auf. Diese Signale werden in den digitalen Modulator (7) eingespeist, der die Signale moduliert, wobei die Modulation aufgrund von Taktsignalen, die der Multiplexer (8) den einzelnen Modulatoren liefert, erfolgt. Die Taktsignale sind dabei für die einzelnen Modulatoren (7) unterschiedlich, weisen aber alle dieselbe Frequenz auf. Am Ausgang des Modulators (7) liegt dann für jeden Kanal ein individuell modulierter Datenkanal vor. Dieser resultierende Datenstrom (D) besitzt Datenraten von einigen 100 MBit und wird in den Multiplexer (8) eingespeist. Der Multiplexer setzt die einzelnen Kanäle in einen Gesamtdatenstrom (C ) um, der z. B. den GBit/s beträgt und in ein Breitbandübertragungsnetz (5) eingespeist wird. Dabei fügt der Multiplexer Informationssignale zu, die Routingfunktionen innerhalb eines bestimmten Protokolls, z. B. SDH, ermöglicht. In das Breitbandnetz eingespeist, können die individuellen Datenkanäle nach den Vorgaben des Netzes weiterverarbeitet werden.

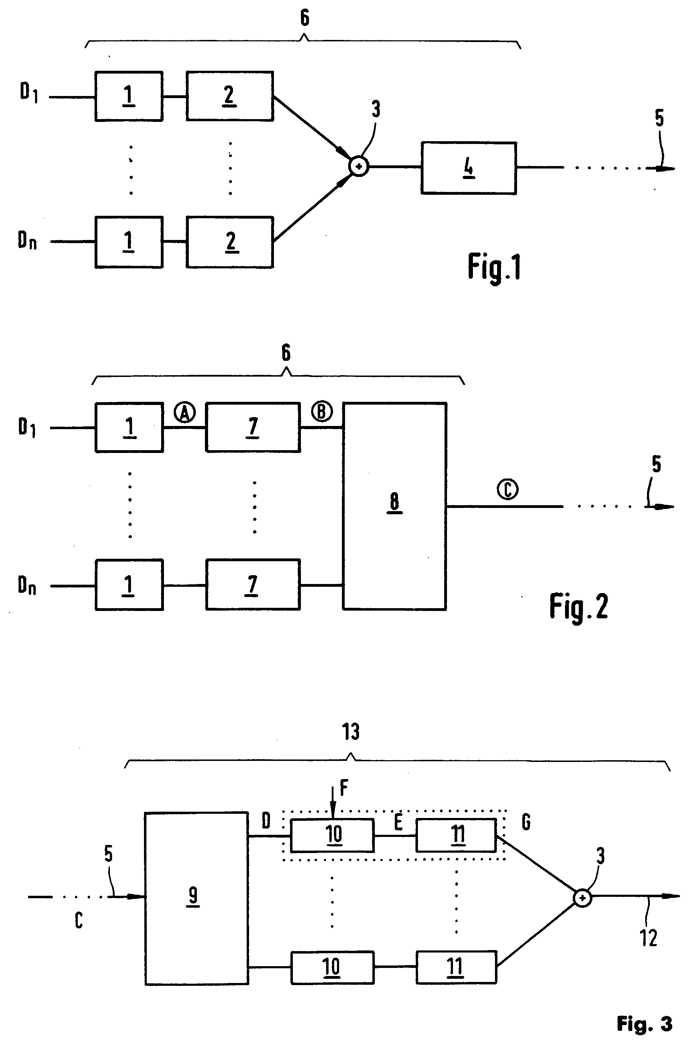

Figur 3 zeigt einen Umsetzer (13), an dem die Umsetzung vom Breitbandnetz (5) in das koaxiale Netz (12) erfolgt. Der Umsetzer (13) weist eingangsseitig einen Demultiplexer (9) auf. Die Ausgänge des Demultiplexers (9) sind mit einem digitalen Upkonverter (10) und dieser wiederum mit einem Digital-/Analogwandler (11) verbunden. Der Ausgang des Wandlers (11) liegt am Eingang eines Addierers (3), dessen Ausgang mit dem koaxialen Netz (12) verbunden ist. Der eingehende Datenstrom (C ) wird im Demultiplexer (9) wieder in einzelne Datenströme (D) rückgewonnen. Die einzelnen einem digitalisierten Datenkanal zugeordneten Datenströme (D) durchlaufen einen digitalen Upkonverter (10) so, daß jeder herausgehende Datenstrom (E) die Zuordnung zu einem Unterträgerkanal mit einer bestimmten Kanalfrequenz im VHF-/UHF-Band erhält. Die Demodulation erfolgt im Demodulator (11), indem die Daten analog rückgewonnen werden. Die Trägerfrequenz jedes Kanals (G) wird durch ein individuelles Signal (F), das den digitalen Upkonverter initialisiert, festgelegt. Anschließend werden alle analogen Kanäle addiert und das Mischsignal in das koaxiale Netz eingespeist.

Die in dem Breitbandübertragungssystem im verwendeten Wandler sind im einfachsten Fall Delta-/Sigma-Modulatoren bzw. -Demodulatoren, da diese ohne großen Aufwand realisiert werden können. Besonders in der Informationszentrale (6) werden eine ganze Anzahl an Modulatoren (4) benötigt, da jeder Kanal eine spezifische Digitalisierung aufweist. Daher wird der Einsatz der einfachen Delta-/Sigma-Modulatoren zu keiner großen Kostenbelastung führen. Auch im Umsetzer (6) ist der einfache Einsatz der Delta-/Sigma-Demodulatoren möglich und auch hier keine große Kostenbelastung für das System. Ein großer Vorteil des vorgeschlagenen Breitbandübertragungssystems ist es, daß die verwendeten Modulatoren mit geringen Bit-Raten arbeiten können und daher einfach aufgebaut werden können. Im Stand der Technik wird ein Digitalisierer, der aufwendig bei hohen Datenraten arbeiten muß, eingesetzt. Weiterhin ist es von Vorteil, daß jeder Kanal individuell gehandhabt werden kann und daß aus der Mischung der Kanäle für jedes koaxiale Netz eine individuelle Zusammenstellung von Kanälen wird. Auch die Anpassung von neu eingespeisten Daten an ein solches Netz ist ohne Probleme möglich.

## Patentansprüche

1. Breitbandinformationssystem für Verteildienste und interaktive Dienste mit einer Informationszentrale (6) und einem Breitbandnetz (5) sowie einem Umsetzer (13), an dem mindestens ein koaxiales Netz (12) angeschlossen ist, wobei die Daten digital über das Breitbandnetz (5) übertragen werden, dadurch gekennzeichnet, daß zur Modulation und Digitalisierung der Kanäle in der Informationszentrale (6) für jeden Kanal (D1 - Dn) ein getrennter D-S-Modulator (4) vorhanden ist und daß die digitalisierten Kanäle über einen Multiplexer (8) zu einem digitalen Datenstrom zusammengefaßt sind.

2. Breitbandinformationssystem für Verteildienste nach Anspruch 1, dadurch gekennzeichnet, daß der Datenstrom im Umsetzer (13) einen Demultiplexer (9), einen digitalen Upkonverter (10) und einen Digital-/Analog-Wandler (11) zur Rückgewinnung der einzelnen VHF-/UHF-Kanäle durchläuft.

3. Breitbandinformationssystem für Verteildienste nach Anspruch 1 oder 2, dadurch gekennzeichnet, daß im Umsetzer (13) alle rückgewonnen Kanäle einen Addierer (3) durchlaufen und zu einer UHF-/ VHF- Kanalmischung addiert werden.

4. Breitbandinformationssystem für Verteildienste nach einem der vorhergehenden Ansprüche, dadurch gekennzeichnet, daß das Breitbandübertragungsnetz (5) ein SDH/SONET-ADM-Transportsystem ist.

5. Breitbandinformationssystem für Verteildienste nach einem der vorhergehenden Ansprüche, dadurch gekennzeichnet, daß die Demodulation in den Umsetzern mit Delta-/Sigma-Demodulatoren erfolgt.
